# EUROPEAN PATENT APPLICATION

(11) **EP 1 393 967 A1**
(43) Date of publication of application: **03.03.2004**
(21) Application number: 03254957.8
(22) Date of filing: 08.08.2003
(51) Int. Cl.: B60N 2/28, B60R 22/10

(54) **Restraining strap system**

(30) Priority: 16.08.2002 AU 2002950819
(71) Applicant: Britax Childcare Pty Ltd., Sunshine, Melbourne 3020 (AU)
(72) Inventor: Maciejcyk, Wieslaw, Sunshine, Victoria 3020 (AU)
(74) Representative: Hollinghurst, Antony

(57) **Abstract**

A restraining strap system for a child car seat (3) in a vehicle. The child car seat (3) is of a type which can either be rearward or forward facing. The restraining strap system includes a restraining strap (6) having latches (9) at both end thereof which engage with latching bars on the vehicle. The restraining strap (6) passes through separate strap passages (7, 25) for each of the rearward and facing positions of the seat. A retention strap (13) is mounted to the child car seat at one of its ends and to the restraining strap (6) at the other end thereof to prevent complete removal of the restraining strap from the seat when moving the restraining strap from the rearward facing strap passage (25) to forward facing strap passage (7) or vice versa.

## Description

This invention relates to a restraining system for a child car seat in a vehicle, the child car seat being of a type which can either be rearward or forward facing and the restraining strap system including a restraining strap having latches at either end thereof which are adapted to engage with latching bars on the vehicle.

Child car seats may be of the type which is adapted for both forward and rearward facing use and in such seats there is a necessity for two restraining strap paths to ensure that the child car seat is correctly retained in the vehicle. One restraining strap path is used when the child car seat is in the rearward facing position and the other restraining strap path is used when the child car seat is in the forward facing position.

As an alternative to using a seatbelt for retaining the child car seat there has been proposed a restraining strap system using latches which engage with latch bars mounted into the seat either side of the child car seat position. Once again such a restraining strap system must use different restraining strap paths through the seat for rearward and forward seat facing use.

Separate restraining straps can be provided for each with associated latches and length adjusting mechanisms but it is desirable that a single restraining strap be used for both forward and rearward facing strap paths. It is important, however, that the restraining strap cannot be removed entirely from the seat because this may encourage people to use the seat without any restraining strap.

It is the object of this invention therefore to provide a system by which a restraining strap can be used for either rearward or forward facing seats but not be removable from the seat.

According to the invention, in a restraining system of the type described above, the restraining strap is adapted to pass through a first strap passage for the forward facing position of the seat and through a second strap passage for the rearward facing positions of the seat, and a retention strap is secured to the child car seat at one end thereof and to the restraining strap at the other end thereof to prevent complete removal of the restraining strap from the seat when moving the restraining strap from the first strap passage to the second strap passage or vice versa.

It will be seen that by this invention there is proposed a system where the retention strap prevents a user from completely removing the restraining strap to ensure that the restraining strap is used and is used correctly where possible.

The retention strap may be fastened or mounted to the restraining strap by being sewn to the restraining strap. Alternatively the retention strap may have a loop through which the restraining strap passes. Such a loop may be sewn into the retention strap or be a loop on a bracket mounted to the restraining strap.

The retention strap may be fastened to the seat by rivets or other known methods. One such method by being sewn onto the middle bar of a three bar connector which is passed through an elongate aperture in the side of the seat.

Preferably the latches are of a type which include automatic spring engagement when connected to the latching bar and a release button to release the strap when it is desired to remove them. In one embodiment the latches may be arranged to engage in one orientation only with a latch bar in a respective latch cup in the motor vehicle.

The restraining strap may include a length adjuster. The retention strap can be placed on either side of the seat.

Embodiments of the invention will now be described by way of example, with reference to the accompanying drawings, in which:
Figure 1 shows a side view of a child car seat in the forward facing position including the restraining strap system incorporating the retention strap of the present invention;
Figure 2 shows the child car seat of Figure 1 in the rearward facing position;
Figure 3 shows one arrangement by which a retention strap may be connected to a restraining strap;
Figure 4 shows an alternative arrangement by which a restraining strap can be retained by a retention strap;
Figure 5 shows a still further arrangement by which a restraining strap can be fastened to a retention strap;
Figure 6 shows one arrangement by which the retention strap may be attached to the side wall of the child car seat;
Figure 7 shows a side view of another child car seat using a strap restraining strap system incorporating the retention strap of the present invention in the forward facing position;
Figure 8 shows the embodiment of Figure 7 and demonstrating how the restraining strap and retention strap of this embodiment can be moved to be used in the rearward facing position; and
Figure 9 shows the embodiment of Figure 7 and demonstrating how the restraining strap and retention strap of this embodiment is used in the rearward facing position.

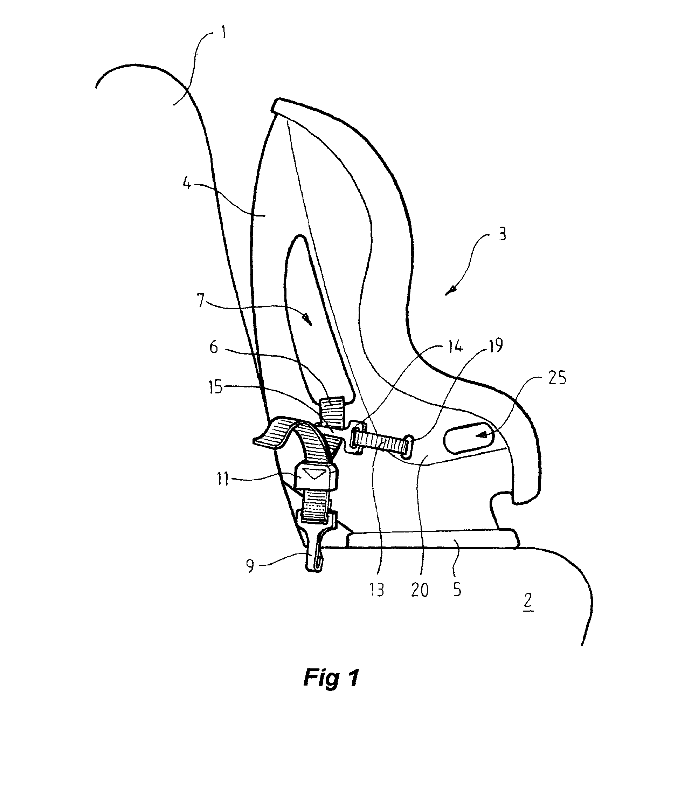

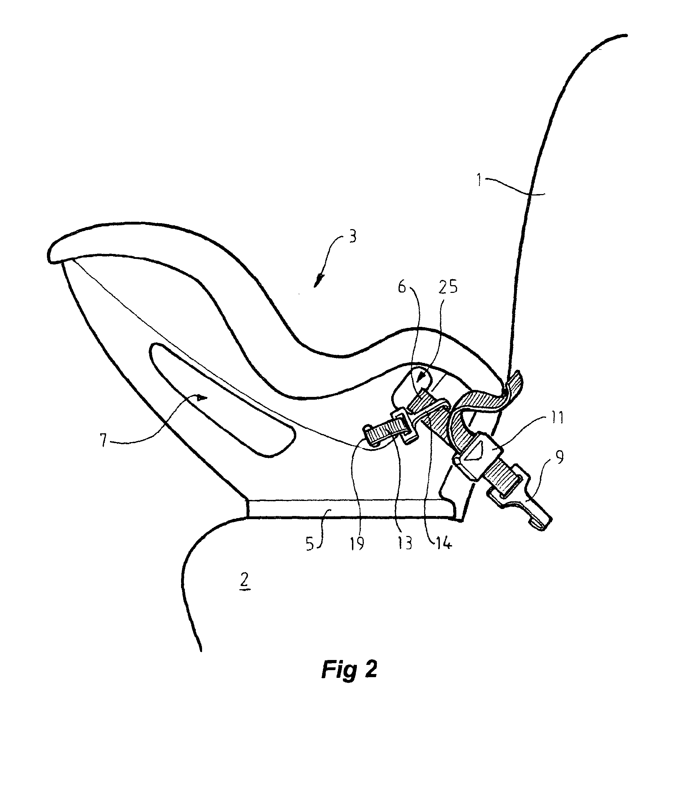

Now looking more closely at the drawings and in particular the embodiment shown in Figures 1 and 2 it will be seen that the vehicle has a rear seat with a seat back 1 and a seat portion 2 upon which a child car seat generally shown as 3 is fitted.

In Figure 1 the child car seat is shown as used in the forward facing position. The child car seat has a base 5 which sits on the seat portion 2 of the vehicle seat and the child car seat 3 has a back portion 4 which leans against the seat back 1. A restraining strap 6 passes through a belt aperture 7 in the portion 4 of the child car seat 3 and has a latch 9 at one end which fastens into a latch bar on the seat (not shown in Figure 1 or Figure 2). The restraining strap 6 includes a length adjuster 11. To ensure that the restraining strap can not be entirely removed from the child car seat, a retention strap 13 is used.

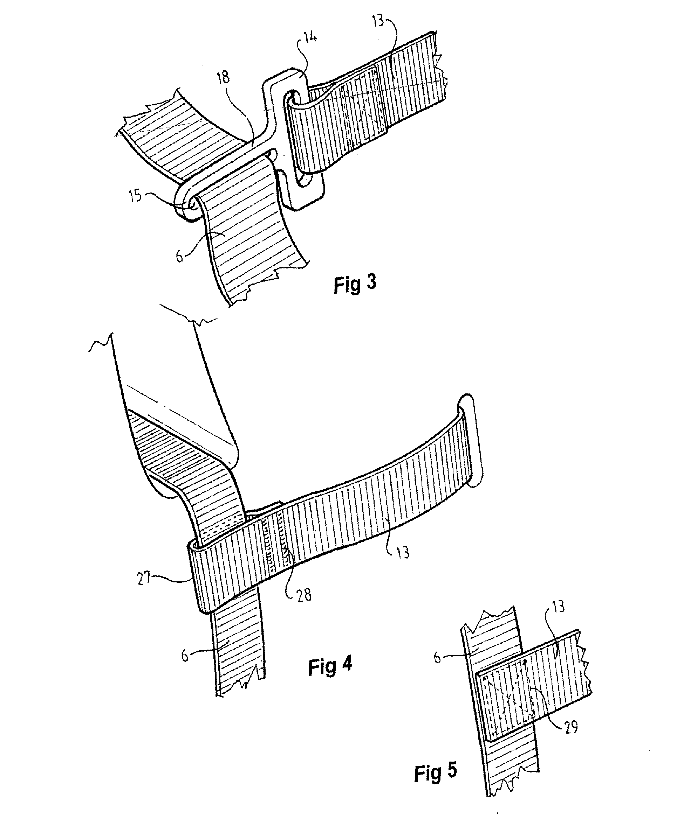

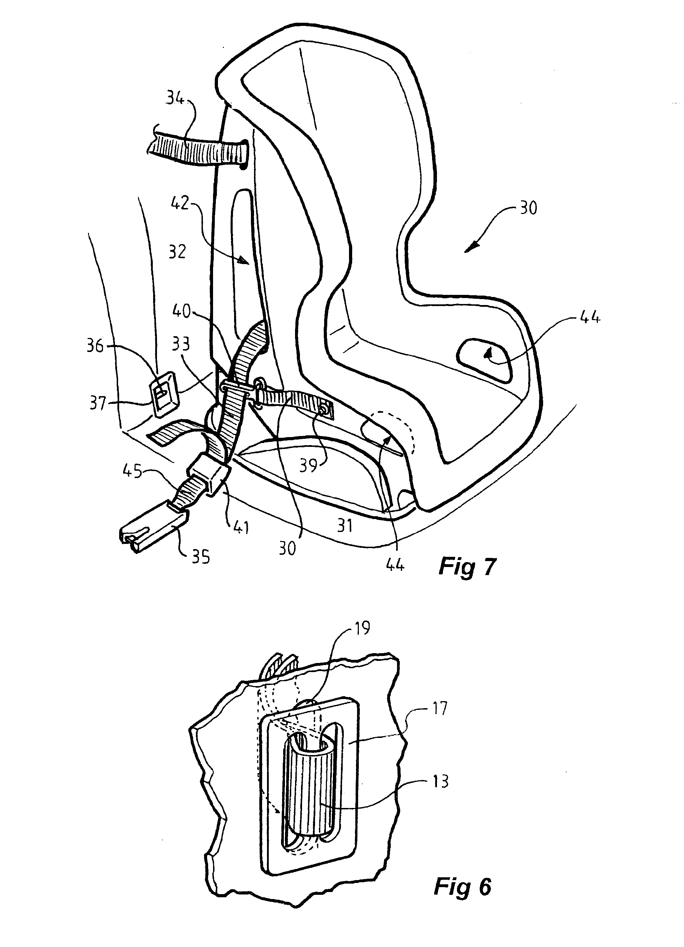

The retention strap 13 has a bracket 14 at one end which has a loop with an aperture 15 through which the restraining strap 6 fastens as is shown in detail in Figure 3. This allows longitudinal movement of the restraining strap 6 to enable length adjustment and tensioning of the restraining strap 6. At the other end of the retention strap 13 is a three bar bracket 17 as can be seen in Figure 6 and this is passed through an aperture 19 in the side wall 20 of the child car seat and retains that end of the retention strap 13 within the seat 3.

This retention strap 13 is flexible so that it enables the restraining strap 6 to be removed from the belt aperture 7 at the rear of the child car seat 3 without the restraining strap 6 being completely taken away from the child car seat 3.

The restraining strap 6 is removed from the aperture 7 when the seat is to be used in the rearward facing position. As shown in Figure 2 the restraining strap 6 is passed through a belt aperture 25 in the side 20 of the child car seat adjacent the seat portion of the child car seat 3.

It will be noted, therefore, that the retention strap 13 enables the restraining strap 6 to be placed in the two positions depending upon the facing direction of the seat but prevents the restraining strap from being completely removed from its connection to the seat.

Figures 4 and 5 show various embodiments by which the retention strap can be connected to the restraining strap.

In Figure 4 the retention strap 13 has a loop 27 of the strap material sewn into it with stitching 28 and it is through this loop 27 that the strap 6 passes so that it once again retains the restraining strap 6 but allows longitudinal movement of the restraining strap 6 to enable length adjustment and tensioning.

Where length adjusting and tensioning of the restraining strap 6 is not so required the retention strap 13 can be stitched directly to the restraining strap 6 as shown in Figure 5. The stitching 29 again prevents complete removal of the restraining strap 6 from the child car seat.

Figures 7, 8 and 9 show an alternative child car seat with a different restraining strap and catch.

In this embodiment the retaining catch 35 is arranged to connect with the latch bar 36 in a latch cup 37, which is mounted into the seat back 32 of a vehicle. The retaining catch 35 is designed so that it can be connected to the latch bar 36 in one orientation. It is necessary, therefore, that as the restraining strap 33 is moved from the forward to the rearward facing position, the retaining catch 35 is presented in the same orientation to the latch bar 36 but at the same time is fixed to the child car seat so that it cannot be removed from it. This is achieved as discussed below.

In the forward facing position shown in Figure 7 , the child car seat 30 sits on a seat portion 31 and leans against seat back 32. At the lower end of the child car seat back there is an aperture 42 through which passes the restraining strap 33 when the child car seat is in the forward facing position. At the upper end of the child seat back there is a latch strap 34 which in use extends to a mounting behind the vehicle seat. Both of these help to retain the child seat in position. The spring loaded catch 35 on the restraining strap 33 which is used to retain the child car seat, engages against the latch bar 36 in the latch cup 37 on the vehicle seat between the back 32 and seat portion 31. A retention strap 38 for the restraining strap 33 is fastened to the side of the child car seat by means of a bolt or rivet 39 and has a loop 40 sewn into its end remote from the bolt or rivet 39 which engages around the restraining strap 33 to prevent the strap from being completely removed from the seat. The bolt or rivet 39 allows the retention strap 38 to rotate about it. A length adjuster 41 is provided for the restraining strap.

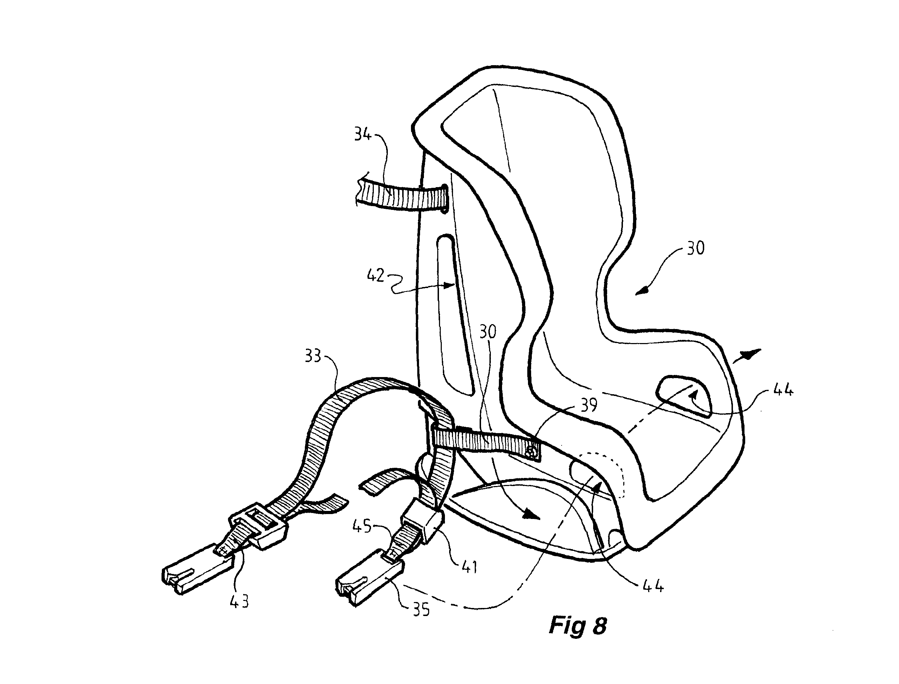

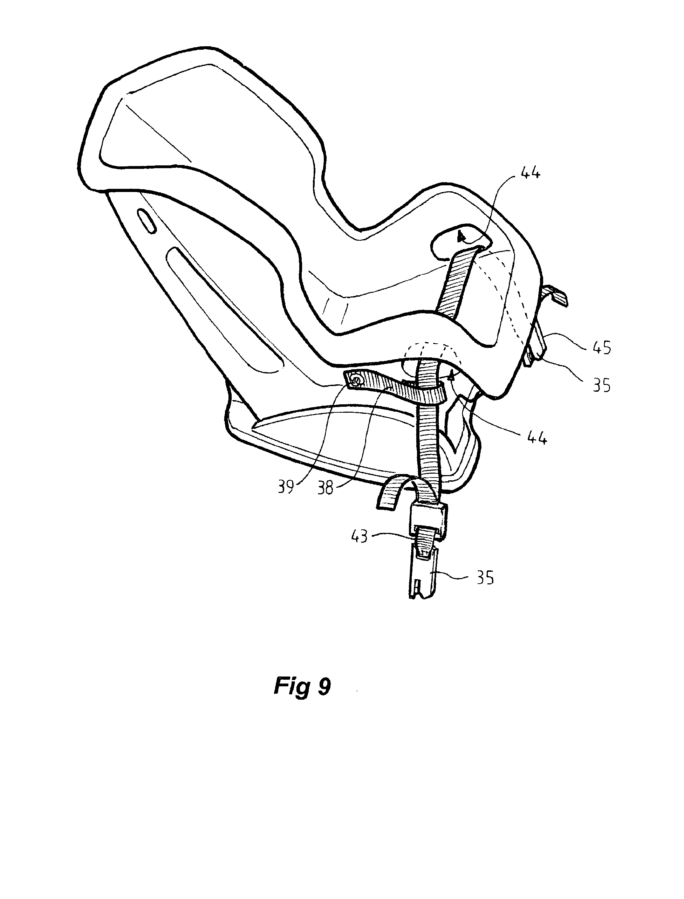

When it is desired to move the restraining strap 33 from the forward to the rearward facing position the movement shown in Figures 8 and 9 is performed.

As can be seen in Figure 8 the end 43 of the restraining strap 33 is withdrawn from the aperture 42 at the rear of the seat . The retention strap 38 is rotated around the bolt or rivet 39 and the end 45 of the restraining strap 33 is passed through the apertures 44 at the front of the seat. This results in the configuration shown in Figure 9 in which the strap end 45 is at the opposite side of the seat so that the catch 35 is in the correct orientation to connect into its latch cup when the seat is placed in its rearward facing orientation.

It will be seen that by this invention there is provided a retention arrangement by which a restraining strap for child car seat can be retained in association with the seat and not completely removed while still allowing adjustment for rearward and forward facing positions of the child car seat.

Throughout this specification unless the context requires otherwise, the words 'comprise' and 'include' and variations such as 'comprising' and 'including' mean the inclusion of a stated integer or group of integers but not the exclusion of any other integer or group of integers.

## Claims

1. A restraining strap system for a child car seat in a vehicle, the child car seat (3, 30) being of a type which can either be rearward or forward facing and the restraining strap system including a restraining strap (6, 33) having latches (9,35) at either end thereof which are adapted to engage with latching bars (36) on the vehicle, **characterized in that** the restraining strap (6, 33) is adapted to pass through a first strap passage (7, 42) for the forward facing position of the seat (3, 30) and through a second strap passage (25, 44) for the rearward facing positions of the seat (3, 30), and a retention strap (13, 38) is secured to the child car seat (3, 30) at one end thereof and to the restraining strap (6, 33) at the other end thereof to prevent complete removal of the restraining strap (6, 33) from the seat (3, 30) when moving the restraining strap (6, 33) from the first strap passage (7, 42) to the second strap passage (25, 44) or vice versa.

2. A restraining strap system as claimed in claim 1, wherein the retention strap (13, 38) is mounted to the restraining strap (6, 33) by means of a loop (27) sewn into the end of the retention strap (13, 38) and through which the restraining strap (6, 33) passes.

3. A restraining strap system as claimed in claim 1, wherein the retention strap (13) is mounted to the restraining strap (6) by means of a bracket (18) mounted to the retraining strap, the bracket (18) including a loop through which the restraining strap (6) passes.

4. A restraining strap system as claimed in any of claims 1 to 3, wherein the restraining strap (6, 33) includes a length adjuster.

5. A restraining strap system as claimed in claim 1, wherein the retention strap (13, 38) is mounted to the restraining strap (6, 33) by being sewn to the restraining strap (6, 33).

6. A restraining strap system as claimed in any preceding claim, wherein the retention strap (13, 38) is fastened to the seat (3, 30) by means of a rivet (39).

7. A restraining strap system as claimed in any of claims 1 to 5, wherein the retention strap (13) is fastened to the seat (3) by means of by being sewn onto the middle bar of a three bar connector (17), which connector (17) is passed through an elongate aperture (19) in the side of the seat (3, 30).

8. A restraining strap system as claimed in any preceding claim, wherein each latch (35) is arranged to engage in one orientation only with a latch bar (36) in a respective latch cup (37) in the motor vehicle.
